# EUROPEAN PATENT SPECIFICATION

(11) **EP 3 342 689 B1**
(45) Date of publication and mention of the grant of the patent: **18.09.2019**
(21) Application number: 17210664.3
(22) Date of filing: 27.12.2017
(51) Int. Cl.: B62H 5/02, B62H 5/06

(54) **STEERING HANDLE LOCK MECHANISM**
LENKERSPERRMECHANISMUS
MÉCANISME DE VERROUILLAGE DE POIGNÉE DE DIRECTION

(30) Priority: 28.12.2016 JP 2016254637
(43) Date of publication of application: 04.07.2018
(73) Proprietor: HONDA MOTOR CO., LTD., Tokyo 107-8556 (JP)
(72) Inventor: YAMAUCHI, Yohei, Saitama, 351-0193 (JP)
(74) Representative: Weickmann & Weickmann PartmbB

(56) References cited:
- JP-A- 2004 001 642
- JP-A- 2006 096 118
- JP-A- 2008 254 462
- US-A1- 2010 236 304

## Description

### BACKGROUND OF THE INVENTION

### Field of the Invention:

The present invention relates to a handle lock mechanism provided on a vehicle, and which engages with a steering unit to lock steering of the steering unit.

### Description of the Related Art:

US 2010/236304 A1 discloses a vehicle with a handle lock mechanism according to the preamble of claim 1.

For example, Japanese Laid-Open Patent Publication No. 2001-063650 discloses a handle lock device for performing a handle locking operation with respect to a handle of a motorcycle. In such a handle lock device, when the driver erects a stand in order to park the motorcycle or the like, an operating force thereof is input to a force point of a swing lever. In this case, when a pressing lever swings via a spring which acts as a fulcrum, a lock pin connected to an action point of the pressing lever engages with a head pipe and a stem pipe that make up the vehicle body frame.

### SUMMARY OF THE INVENTION

However, with the technique disclosed in Japanese Laid-Open Patent Publication No. 2001-063650, the swinging motion of the pressing lever in the form of an arm member operates as the handle locking operation. Therefore, it is difficult to suitably design the position of the force point of the swing lever by which the operating force is input, as well as the stroke amount of the lock pin when the driver erects the stand. Further, because the operating force is transmitted via a cable to the handle lock device in the vicinity of the head pipe, there is also a problem in that the structure of the device becomes large in scale.

Thus, the present invention has the object of providing a vehicle with a handle lock mechanism, which is capable of saving space as well as reducing the size and scale of the handle lock mechanism, while also enhancing operability of the handle locking operation.

The invention provides a vehicle with a handle lock mechanism according to claim 1.

The handle lock mechanism comprises an operating member, which is disposed on the vehicle equipped with a steering unit that is steerably supported with respect to a vehicle main body, together with being supported on the vehicle main body and performing a handle locking operation with respect to a handle that constitutes part of the steering unit, an arm member to which an operating force of the operating member is input, and a lock member adapted to lock steering of the steering unit by coming into engagement with the steering unit accompanying swinging of the arm member caused by the operating force.
First Aspect of the invention: The handle lock mechanism further comprises a link member adapted to slide in a predetermined direction accompanying swinging of the arm member, and in conjunction with an action point of the arm member. In this case, the operating member and the arm member are arranged above a top bridge that constitutes part of the steering unit and supports the handle. Further, the lock member slides in the predetermined direction in conjunction with the link member, whereby the lock member engages with the top bridge.
Second Aspect of the invention: The handle lock mechanism further comprises a bracket that covers the arm member and the link member while supporting the handle lock mechanism on the vehicle main body. The operating member and the arm member are arranged at positions overlapping each other in a height direction, and the link member and the lock member are disposed so as to overlap with the operating member along a vertical direction.
Third Aspect: The lock member is disposed in a slide hole formed in the bracket, and engages with the link member so as to slide in the predetermined direction along the slide hole.
Fourth Aspect: The link member slides substantially in parallel with an upper surface of the top bridge at a location above the top bridge.
Fifth Aspect: A fulcrum, a force point to which the operating force is input, and the action point are arranged in this order from above to below on the arm member, and the arm member overlaps at least halfway with the operating member along the vertical direction.
Sixth Aspect: A recess into which the lock member is inserted is provided in a side surface of the top bridge.

According to the first aspect of the present invention, the operating member and the arm member are both arranged above the top bridge. Therefore, the operating member and the arm member are arranged in the vicinity of the handle which is supported by the top bridge. Owing thereto, operability of the handle locking operation can be improved. Further, since the operating member and the arm member can be arranged in close proximity to each other, it is possible to achieve a savings in space of the operating member and the arm member. Furthermore, since the lock member slides in the predetermined direction in conjunction with the link member, a reduction in size of the arm member is also enabled. As a result, a savings in space and a reduction in size of the handle lock mechanism as a whole can be realized.

According to the second aspect of the present invention, along with achieving a reduction in size of the bracket, unintended access to the arm member, the link member, and the lock member from the exterior (for example, tampering with respect to components inside the bracket) can be prevented.

According to the third aspect of the present invention, while the sliding motion of the lock member is guided in the slide hole of the bracket, the lock member and the link member engage with one another so that the lock member slides in the predetermined direction along the slide hole. Owing to this feature, there is no need to machine the respective components that make up the handle lock mechanism with high accuracy, and therefore, the cost to machine the respective components can be reduced. In particular, assuming that the link member and the lock member are engaged with one another in the predetermined direction (sliding direction), the above effect can easily be obtained.

According to the fourth aspect of the present invention, since the link member slides along the upper surface of the top bridge, a reduction in size of the handle lock mechanism can be easily achieved.

According to the fifth aspect of the present invention, while the operating force of the operating member is input to the force point at the center of the arm member, the height direction of the operating member is aligned to the greatest extent possible with the height direction of the arm member. Consequently, it is possible to ensure a stroke amount in the predetermined direction of the lock member, while also reducing the size of the portion above the top bridge in the handle lock mechanism.

According to the sixth aspect of the present invention, locking of the top bridge can be made to occur with a simple configuration. Further, simply by sliding the lock member along the predetermined direction, the lock member is inserted into the recess, and steering of the steering unit is locked. Consequently, the need for highly precise positional accuracy between the lock member and the recess is eliminated, and a further reduction in machining costs can be realized.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a right side view of a motorcycle in which a handle lock mechanism according to an embodiment of the present invention is incorporated;
FIG. 2 is a view illustrating portions around the periphery of the handle lock mechanism as viewed from the perspective of a driver;
FIG. 3 is a cross-sectional view taken along line III-III of FIG. 2;
FIG. 4 is an exploded perspective view of the handle lock mechanism shown in FIG. 1;
FIG. 5 is a perspective view illustrating an arrangement of components in the interior of a bracket shown in FIG. 4;
FIG. 6 is a cross-sectional view taken along line VI-VI of FIG. 4;
FIG. 7 is an explanatory diagram showing a handle locking operation (locking operation) effected by the handle lock mechanism; and
FIG. 8 is an explanatory diagram showing a handle unlocking operation (lock releasing operation) effected by the handle lock mechanism.

### DESCRIPTION OF THE PREFERRED EMBODIMENTS

A preferred embodiment of a handle lock mechanism according to the present invention will be presented and described in detail below with reference to the accompanying drawings.

### [Configuration of Motorcycle 12]

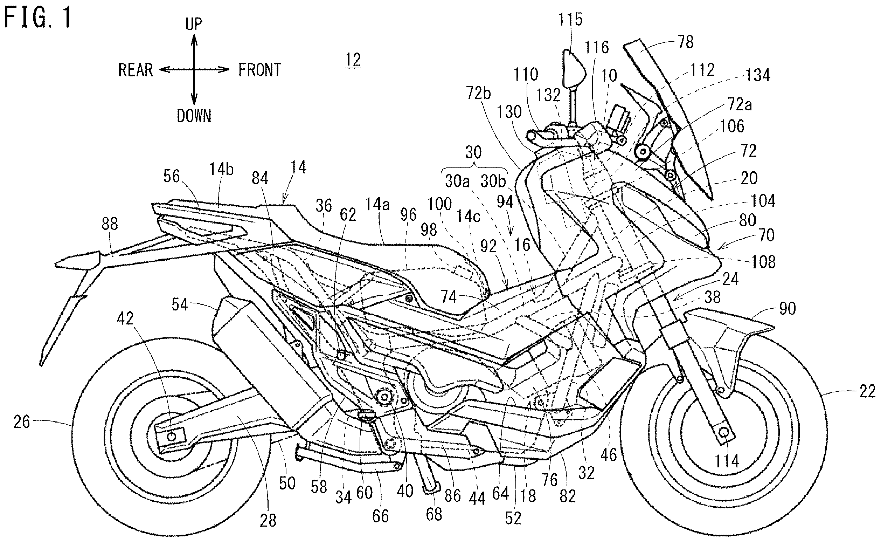

FIG. 1 is a right side view of a motorcycle 12 as a vehicle in which a handle lock mechanism 10 according to a present embodiment is incorporated. In the description of the present embodiment, front and rear, right and left, and up and down directions will be described according to directions as viewed from the perspective of an occupant who is seated on a seat 14 of the motorcycle 12.

The motorcycle 12 is a saddle type vehicle in which a seat 14, on which a vehicle occupant is seated in a straddling manner, is provided above a rear portion of a vehicle body frame 16 (vehicle main body). The vehicle body frame 16 supports an engine 18 which serves as a power unit. A head pipe 20 at a front end of the vehicle body frame 16 supports a steering unit 24 for steering the front wheel 22. Further, a swing arm 28 that supports the rear wheel 26 is provided on the rear side of the vehicle body frame 16.

In the vehicle body frame 16, a pair of left and right main frames 30 extend rearward and downwardly from a rear portion of the head pipe 20. A pair of left and right down frames 32 extend rearward and downwardly from front end portions of the main frames 30. Further, a pair of right and left pivot frames 34 extend rearward and downwardly from rear ends of the main frames 30. Furthermore, at the rear ends of the main frames 30, a pair of right and left seat frames 36 extend rearwardly of the vehicle, and rearward and upwardly from upper portions of the pivot frames 34.

The left and right main frames 30 include main frame body portions 30a that extend rearward and downwardly with a comparatively gentle inclination from a lower portion of the head pipe 20, and reinforcing frame portions 30b that connect an upper portion of the head pipe 20 and front parts of the main frame body portions 30a. Intermediate parts of the main frame body portions 30a and the down frames 32 are connected by a pair of left and right connecting frames 38.

The pair of left and right pivot frames 34 are connected by a pivot shaft 40 that extends in the vehicle widthwise direction. A front end portion of the swing arm 28 is pivotally supported by the pivot shaft 40. Therefore, the swing arm 28 swings upward and downward about the pivot shaft 40. The rear wheel 26 is pivotally supported by a rear wheel axle 42 which is inserted through the rear end portion of the swing arm 28.

In front of the pivot frames 34, the engine 18 is mounted on the motorcycle 12 so as to be suspended from the vehicle body frame 16. The engine 18 is equipped with a crankcase 44 that supports a non-illustrated crankshaft which extends in the vehicle widthwise direction (lateral direction) of the motorcycle 12, and a cylinder section 46 that extends forward and upwardly from a front portion of the crankcase 44. In this case, the engine 18 is positioned below the main frame body portions 30a. Further, the cylinder section 46 extends forward and upwardly in following relation to the main frame body portions 30a. A front part of the cylinder section 46 is located between the left and right down frames 32 as well as between the left and right connecting frames 38. A non-illustrated transmission is accommodated in a rear part of the crankcase 44.

The engine 18 is an engine which is forwardly inclined so that the cylinder section 46 is disposed more horizontally than it is vertically. An output from the engine 18 is transmitted to the rear wheel 26 via a chain 50, which is wound on the output shaft of the engine 18 and the rear wheel 26.

An exhaust pipe 52 of the engine 18 is drawn out downwardly from a cylinder head of the cylinder section 46, passes under the engine 18 and extends in a rearward direction, and is connected to a muffler 54 on the right side of the swing arm 28.

The seat 14 is made up from a front seat 14a for the driver (vehicle occupant), and a rear seat 14b for a passenger. The rear seat 14b is arranged one step higher than the front seat 14a. Further, the seat 14 is disposed so as to be vertically rotatable via a hinge 14c at a front end portion thereof. The front seat 14a is disposed above a rear portion of the main frames 30, above the pivot frames 34, and above a rear portion of the crankcase 44. The rear seat 14b is disposed above a rear portion of the seat frames 36. On the left and right sides of the rear seat 14b, grip members 56 are provided respectively, which are gripped by the passenger who is seated on the rear seat 14b.

A pair of right and left plate-shaped step holders 58 are provided on outside surfaces of the pivot frames 34. The step holders 58 support a pair of left and right driver sub-steps 60 for the driver, as well as passenger steps 62 for the passenger, respectively. On front lower sides of the front seat 14a, a pair of left and right main steps 64 for use by the driver are provided. A main stand 66 is connected to lower portions of the pivot frames 34. Furthermore, a side stand 68 is provided on a left end part of the lower portion of the vehicle body frame 16.

The motorcycle 12 further includes a vehicle body cover 70 that covers the vehicle body. The vehicle body cover 70 includes a front cover 72 that covers the head pipe 20 and an upper portion of the steering unit 24 from the front, rear, left, and right sides thereof, a seat bottom cover 74 that covers the main frames 30 from the upper, left, and right sides thereof at a lower rear part of the front cover 72, and a pair of left and right intermediate side covers 76 that cover a rear portion of the engine 18 and the vehicle body frame 16 from the sides at a location below the seat bottom cover 74.

The front cover 72 includes a front surface cover 72a that covers the head pipe 20 and an upper portion of the steering unit 24 from the front, left, and right sides thereof, and a rear surface cover 72b that covers the head pipe 20 and the steering unit 24 from the rear. An upward and downward extending plate-shaped wind screen 78, and a headlight 80 are provided on the front surface cover 72a.

Further, the vehicle body cover 70 includes an undercover 82 that covers the engine 18 from below, a pair of left and right rear covers 84 that cover the bottom of the seat 14 from the sides at a location behind the seat bottom cover 74, and a pair of left and right frame covers 86 that cover a lower rear portion of the engine 18 and lower portions of the pivot frames 34 from the sides.

In addition, the motorcycle 12 includes a rear fender 88 that covers the rear wheel 26 from above, and a front fender 90 that covers the front wheel 22 from above.

A front part of the seat bottom cover 74 and front portions of the intermediate side covers 76 are vertically aligned to thereby form a tunnel-shaped center tunnel section 92 having an inverted U-shaped cross section. A front portion of the vehicle body frame 16 and the cylinder section 46 are accommodated inside the center tunnel section 92. An upper surface of the center tunnel section 92 is disposed at a position lower than the upper surface of the front seat 14a. Owing thereto, between the front surface of the front seat 14a and the rear surface cover 72b, a downwardly recessed straddling section 94 is formed, over which the driver who is seated on the front seat 14a can pass his legs when getting on and off from the motorcycle 12.

A fuel tank 96 is disposed below the front seat 14a. A fuel supply port 98 is provided on an upper surface of a front part of the fuel tank 96. In this case, when the seat 14 is opened upwardly, the fuel tank 96 is exposed from above. A lid 100 is provided on a front end portion of the front seat 14a. In this case, when the lid 100 is rotated toward the straddling section 94, the fuel supply port 98 is exposed.

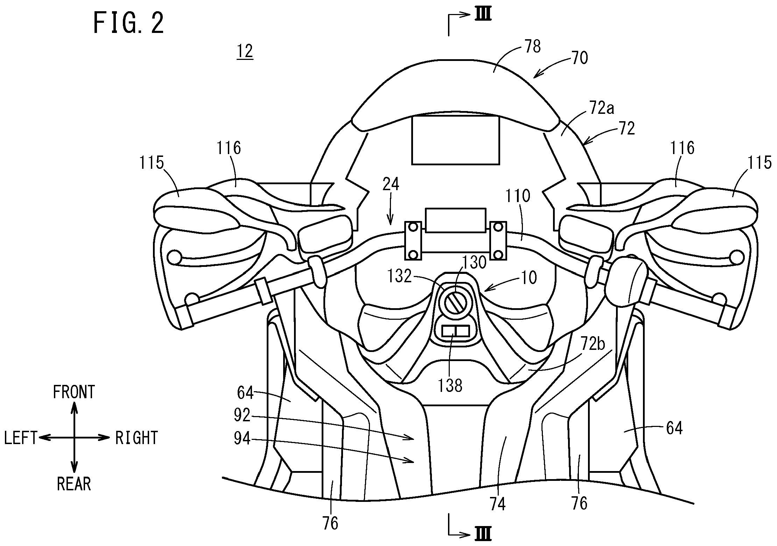

As shown in FIGS. 1 to 3, the steering unit 24 comprises a steering shaft 102 which is axially supported in a rotating manner by the head pipe 20, a pair of right and left front forks 104 disposed on both left and right sides of the front wheel 22 and which support the front wheel 22, a top bridge 106 fixed to an upper end of the steering shaft 102 and connecting the left and right front forks 104, and a bottom bridge 108 fixed to a lower end of the steering shaft 102 and connecting the left and right front forks 104. Further, the steering unit 24 is also equipped with a bar handle 110, which serves as a steering handle provided above the front forks 104, and a handle post 112 that fixes the bar handle 110 to the top bridge 106.

The front wheel 22 is pivotally supported by a front wheel axle 114 that is passed between lower end portions of the front forks 104. On the other hand, a pair of left and right rearview mirrors 115 and a pair of left and right knuckle guards 116 are provided on the bar handle 110.

The top bridge 106 is positioned above the head pipe 20. A center portion of the top bridge 106 in the vehicle widthwise direction is configured in the form of a shaft fixing portion through which the steering shaft 102 is inserted and fixed. Further, both end portions of the top bridge 106 in the vehicle widthwise direction are configured as fork fixing members, into which the upper parts of the front forks 104 are fitted and fixed. When the steering unit 24 is steered due to the bar handle 110 being operated by the driver, the top bridge 106 and related components are rotated about the steering shaft 102.

### [Configuration of Handle Lock Mechanism 10]

Next, a description of the handle lock mechanism 10 which is mounted on the motorcycle 12 will be presented with reference to FIGS. 1 through 8.

The handle lock mechanism 10 is fixedly supported on the motorcycle 12 by (the head pipe 20 of) the vehicle body frame 16, in a space in proximity to the head pipe 20, the top bridge 106, and the handle post 112. The handle lock mechanism 10 restricts (locks) steering of the steering unit 24 due to a handle locking operation of the driver performed at a time of parking or the like.

The handle lock mechanism 10 comprises an operating member 132 equipped with a lock knob 130 by which the driver performs a handle locking operation (locking operation) or a handle lock releasing operation (unlocking operation), and a main body section 134 that carries out a handle locking action (locking action) or a handle lock releasing action (unlocking action) with respect to the steering unit 24 due to operation of the lock knob 130 by the driver. The operating member 132 is attached by a non-illustrated fastening means to the rear of the main body section 134. The main body section 134 is fixed to a substantially planar frame 136, which is provided at a rear part of the head pipe 20. Consequently, the handle lock mechanism 10 is supported by the vehicle body frame 16.

A lock knob 130 and a changeover switch 138, which are operated by the driver or the like, are disposed on an upper surface of the operating member 132. Accordingly, the operating member 132 functions as a combination switch (operating element). In this instance, the lock knob 130 is an operation switch for turning a main power supply of the motorcycle 12 on and off, and switching between actions of the main body section 134. Due to the lock knob 130 being operated by the driver, the operating member 132 causes an operation pin 140, which projects out from a front surface facing toward the main body section 134, to advance and retract. The changeover switch 138 is an operation switch for switching between a locked state of the seat 14 and a locked state of the lid 100.

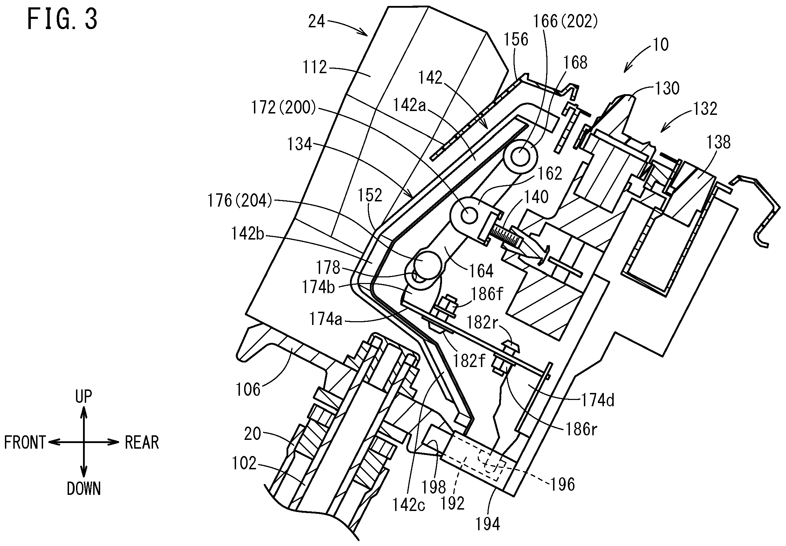

The main body section 134 includes a bracket 142 to which the operating member 132 is attached. The bracket 142 is a housing, which extends downwardly from above at a location behind the handle post 112, the top bridge 106, and the head pipe 20, and is capable of accommodating respective components therein that make up the main body section 134. More specifically, as shown in FIGS. 3, 4, 7, and 8, the bracket 142 is formed in a manner so that an upper side portion 142a of the bracket 142, which faces mutually in a longitudinal (front/rear) direction with respect to the handle post 112 (see FIGS. 1 and 3), has a forwardly protruding shape. Further, a central portion 142b of the bracket 142 extends rearwardly from the upper side portion 142a at a location above the top bridge 106. Furthermore, a lower side portion 142c of the bracket 142 faces mutually in the longitudinal direction with respect to the top bridge 106, and extends to the frame 136. The operating member 132 is fixed to a back surface portion 142d that constitutes part of the upper side portion 142a of the bracket 142.

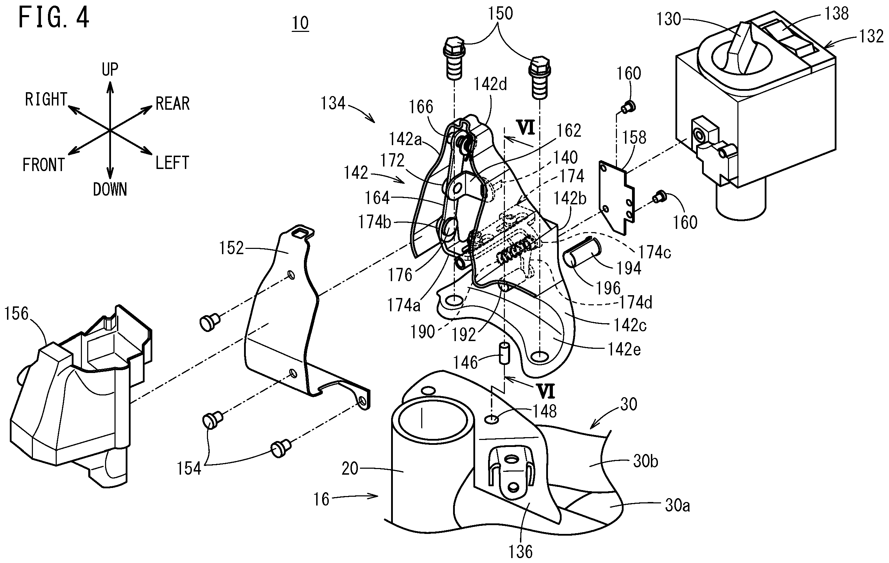

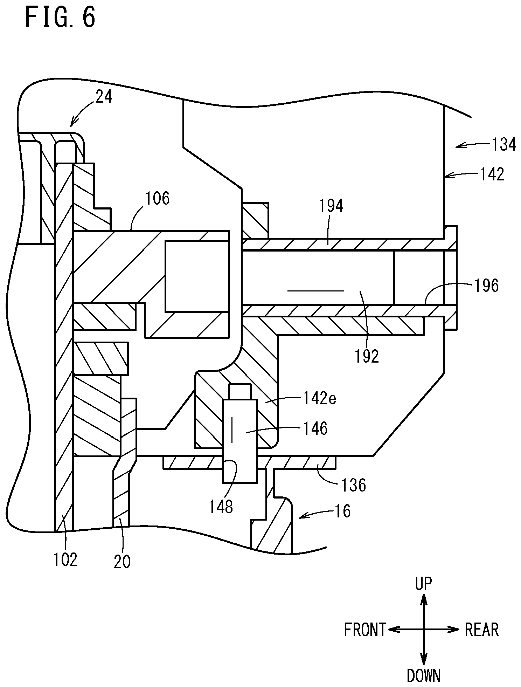

Further, a bottom part 142e which is continuous with the lower side portion 142c of the bracket 142 has a shape in which a central portion thereof is slightly recessed rearwardly. A positioning pin 146 is disposed in the center of the bottom part 142e. The positioning pin 146 is inserted into a positioning hole 148 which is provided in the center of the frame 136 (see FIGS. 4 and 6). Consequently, the bracket 142 is positioned at a predetermined location on the upper surface of the frame 136. Furthermore, both left and right ends of the bottom part 142e are fixed by bolts 150 to both left and right ends of the frame 136.

Further, locations of the upper side portion 142a, the central portion 142b, and the lower side portion 142c that face toward the handle post 112 and the top bridge 106 are opened largely in the forward direction. A first cover member 152 is fitted onto these opened portions from the front. The first cover member 152 is fixed to the bracket 142 by bolts 154. A second cover member 156 is further fitted onto the bracket 142 from the front in covering relation to the first cover member 152.

On the other hand, the lower side portion 142c opens rearwardly, and the opening thereof is covered with a third cover member 158. The third cover member 158 is fixed to the lower side portion 142c by bolts 160. In this manner, the first to third cover members 152, 156, 158 are fixed to the bracket 142. As a result, a closed space in which the various components can be accommodated is formed inside the bracket 142, and together therewith, entry of water, dust, and the like into the closed space from the exterior can be prevented.

The following components are accommodated in the interior of the closed space. More specifically, the operation pin 140 of the operating member 132 enters into the closed space from the rear at the location of the upper side portion 142a. The operation pin 140 is a bolt-shaped push rod, which is connected to an L-shaped plate 162. Another end of the plate 162 is connected to a central part of an arm member 164 that is disposed inside the upper side portion 142a.

The arm member 164 is a plate-shaped member extending in the vertical direction, and is disposed in a forwardly inclined manner from an upper side toward a lower side thereof. In this case, the operating member 132 and the arm member 164 are arranged above the top bridge 106, at positions overlapping one another in the vertical direction (height direction). Further, the operating member 132 and the arm member 164 are arranged so as to overlap one another at least halfway along the height direction.

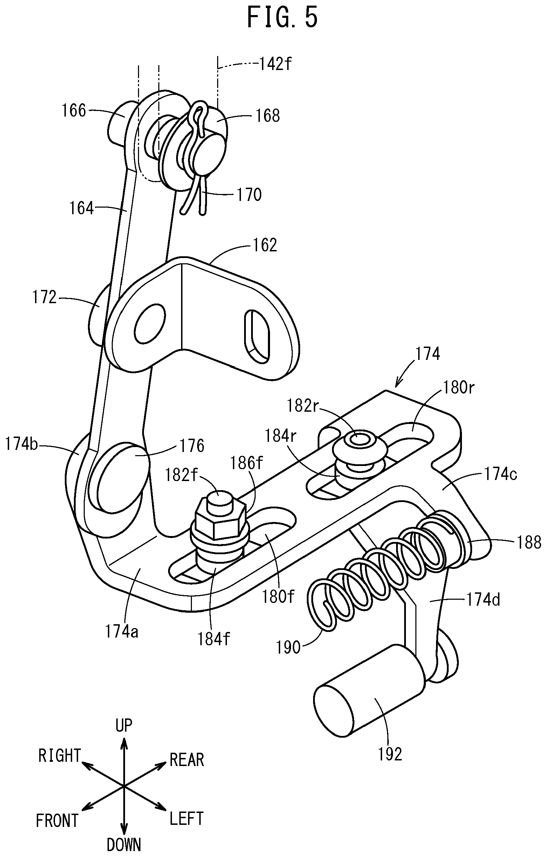

An upper end part of the arm member 164 extends to a suspended part 142f (see FIGS. 5, 7, and 8) that extends downwardly from an upper end of the upper side portion 142a. A pin member 166 penetrates in a lateral (left/right) direction through the suspended part 142f and the upper end part of the arm member 164. A washer 168 is inserted over the left end of the pin member 166 (a distal end part thereof which has passed through the suspended part 142f), and a snap pin 170 for preventing detachment of the pin member 166 and the washer 168 is mounted in the pin member 166.

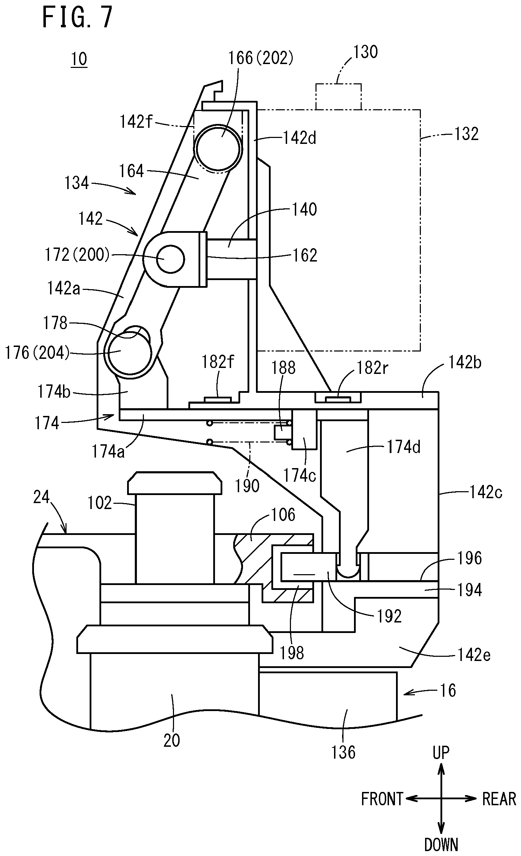

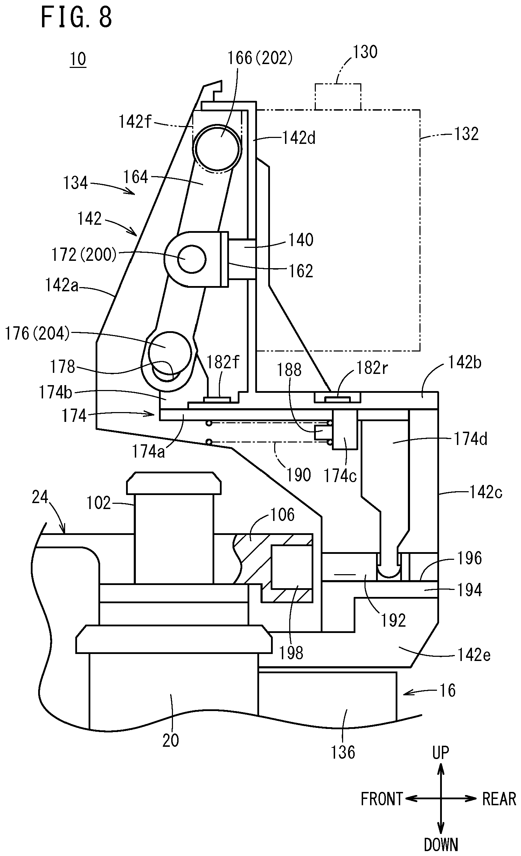

A central part of the arm member 164 and the plate 162 are caulked together in the lateral direction by a caulking pin 172. A lower end part of the arm member 164 is connected to a link member 174. The link member 174 includes a plate-shaped section 174a that serves as a sliding member extending in a predetermined direction (longitudinal direction). An upwardly extending projecting part 174b is formed on the right side of the front end portion of the plate-shaped section 174a. The projecting part 174b and the lower end part of the arm member 164 are caulked together in the lateral direction by a caulking pin 176, thereby connecting the arm member 164 and the link member 174. Moreover, as shown in FIGS. 7 and 8, an elongate through hole 178, which extends along the arm member 164 and through which the caulking pin 176 penetrates, is formed at the lower end part of the arm member 164.

The plate-shaped section 174a extends in the longitudinal direction substantially in parallel with the upper surface of the top bridge 106. As shown in FIG. 5, elongate through holes 180f, 180r are formed respectively in front and rear sides of the plate-shaped section 174a along the longitudinal direction. Bolts 182f, 182r are inserted through each of the through holes 180f, 180r. As shown in FIGS. 3 and 5, the respective bolts 182f, 182r are inserted respectively through collars 184f, 184r and a central portion 142b of the bracket 142, and are screw-engaged with nuts 186f, 186r.

An oblique downwardly extending projecting part 174c is formed on the left side of a rear end portion of the plate-shaped section 174a. A spring member 190 is attached through a collar 188 to the projecting part 174c. The spring member 190 is a compression spring, which is interposed between the collar 188 and a location on a front side in the central portion 142b of the bracket 142. The spring member 190 functions as a return spring that applies a spring force in a rearward direction (in a direction opposite to the direction in which the spring is compressed).

A downwardly extending connecting part 174d is formed on the right side of the rear end portion of the plate-shaped section 174a. A lock member 192 in the form of a lock pin that extends in the longitudinal direction is connected to a lower end of the connecting part 174d. The lock member 192 is supported in the longitudinal direction by a cylindrical sleeve 194 which is arranged in the lower side portion 142c of the bracket 142. More specifically, the lock member 192 is slidably supported in the longitudinal direction inside a slide hole 196 formed in the sleeve 194. Further, the link member 174 and the lock member 192 are disposed so as to overlap with the operating member 132 along the vertical direction.

In addition, the slide hole 196 is formed in facing relation to the side surface of the top bridge 106. Accordingly, the lock member 192 is disposed in the sleeve 194 so as to face toward the top bridge 106. A recess 198 is formed in the top bridge 106 into which the lock member 192 can be inserted when the lock member 192 is advanced and retracted in the longitudinal direction along the slide hole 196.

### [Operations of the Handle Lock Mechanism 10]

Operations of the handle lock mechanism 10, which is configured in the manner described above, will now be described with reference to FIGS. 1 through 8. Descriptions will be given concerning a case in which the main body section 134 performs a handle locking action (locking action) with respect to the steering unit 24 in accordance with a handle locking operation (locking operation) of the lock knob 130 performed by the driver (see FIG. 7), and a case in which the main body section 134 performs a handle lock releasing action (unlocking action) with respect to the steering unit 24 in accordance with a handle lock releasing operation (unlocking operation) of the lock knob 130 performed by the driver (see FIG. 8). Moreover, although as described above, the lock knob 130 is also capable of turning the main power supply of the motorcycle 12 on and off, in the description of operations presented herein, descriptions concerning switching between on and off states of the main power supply are omitted.

First, with reference to FIG. 7, a description will be given concerning the handle locking action of the main body section 134 caused by a locking operation of the driver. At a time that the motorcycle 12 is parked, and when the driver rotates the lock knob 130, the operation pin 140 projects out in a forward direction due to operation of the lock knob 130. The operation pin 140 is connected to the central part of the arm member 164 via the plate 162 and the caulking pin 172. Accordingly, when the operation pin 140 moves forward, a central portion (the caulking pin 172) of the arm member 164 becomes a force point 200 of the operating force which acts in a direction (forward direction) from the operation pin 140 toward the arm member 164.

In this case, because the pin member 166 penetrates through the upper end part of the arm member 164 and the suspended part 142f of the bracket 142, the position of the upper end part of the arm member 164 is fixed. Accordingly, the upper end part (the pin member 166) of the arm member 164 serves as a fulcrum 202 with respect to the aforementioned operating force.

Therefore, when the operating force in the forward direction acts on the force point 200, the arm member 164 swings (rotates) about the fulcrum 202 in a clockwise direction as shown in FIG. 7. Consequently, the lower end part of the arm member 164 is displaced from the position shown in FIG. 8 to a position on a front upper side as shown in FIG. 7. More specifically, the lower end part (the caulking pin 176) of the arm member 164 serves as an action point 204 of the operating force. In this case, because the through hole 178 is formed in an elongated shape along the arm member 164, the arm member 164 can be swung smoothly.

The lower end part of the arm member 164 is connected to the projecting part 174b of the link member 174 via the caulking pin 176. Consequently, in the case that the arm member 164 is swung to the front upper side, in conjunction with movement of the action point 204, the link member 174 slides forward as a whole along the upper surface of the top bridge 106 in opposition to the biasing force of the spring member 190 in the rearward direction. In this case, the bolts 182f, 182r penetrate through the elongate through holes 180f, 180r (see FIG. 5). As a result, the link member 174 can slide smoothly in the forward direction.

The lock member 192 is connected to the connecting part 174d of the link member 174. Therefore, in the case that the link member 174 is slid forward, the lock member 192 slides in the forward direction in conjunction with the link member 174 under a guiding action of the slide hole 196. Consequently, the lock member 192 is inserted into the recess 198, and steering of the steering unit 24 including the top bridge 106 can be restricted.

Next, with reference to FIG. 8, a description will be given concerning the handle lock releasing action of the handle lock of the main body section 134 caused by an unlocking operation of the driver. During parking, when the driver turns the lock knob 130 in a direction opposite to that of the locking operation, the operation pin 140 is retracted due to operation of the lock knob 130. Consequently, an operating force from the operation pin 140 acts in a rearward direction on the central part (force point 200) of the arm member 164 via the plate 162 and the caulking pin 172.

As a result, the arm member 164 swings about the fulcrum 202 in a counterclockwise direction as shown in FIG. 8. Consequently, the lower end part of the arm member 164 is displaced from the position shown in FIG. 7 to a position on a rear lower side as shown in FIG. 8. In this case as well, because the through hole 178 is formed in an elongated shape, the arm member 164 can be swung smoothly.

By the arm member 164 swinging rearward and downwardly, in conjunction with displacement of the action point 204, the link member 174 slides rearward as a whole along the upper surface of the top bridge 106. In this case, together with the bolts 182f, 182r penetrating through the elongate through holes 180f, 180r (see FIG. 5), a rearward biasing force of the spring member 190 acts on the link member 174. Consequently, the link member 174 can slide smoothly in the rearward direction.

In addition, by the link member 174 sliding rearward, the lock member 192 slides in the rearward direction in conjunction with the link member 174 under a guiding action of the slide hole 196. Consequently, the lock member 192 that was inserted into the recess 198 separates away from the recess 198, and is retracted into the sleeve 194 under the guiding action of the slide hole 196. As a result, the steering unit 24 including the top bridge 106 is released (unlocked) from the handle locked state by the lock member 192.

### [Advantages and Effects of the Present Embodiment]

As described above, in accordance with the handle lock mechanism 10 according to the present embodiment, the operating member 132 and the arm member 164 are arranged above the top bridge 106. Owing to this feature, the operating member 132 and the arm member 164 are arranged in the vicinity of the bar handle 110 which is supported by the top bridge 106. As a result, operability of the handle locking operation can be improved. Further, since the operating member 132 and the arm member 164 can be arranged in close proximity to each other, it is possible to achieve a savings in space of the operating member 132 and the arm member 164. Furthermore, since the lock member 192 slides in the longitudinal direction in conjunction with the link member 174, a reduction in size of the arm member 164 is also enabled. As a result, a savings in space and a reduction in size of the handle lock mechanism 10 as a whole can be realized.

Further, in the present embodiment, the bracket 142 covers the arm member 164 and the link member 174 while supporting the handle lock mechanism 10 on the head pipe 20. Further, the operating member 132 and the arm member 164 are arranged at positions overlapping each other in a height direction. Furthermore, the link member 174 and the lock member 192 are disposed so as to overlap with the operating member 132 along the vertical direction. In accordance with this feature, along with achieving a reduction in size of the bracket 142, unintended access to the arm member 164, the link member 174, and the lock member 192 from the exterior (for example, tampering with respect to components inside the bracket 142) can be prevented.

Further, in the present embodiment, the sliding motion of the lock member 192 in the longitudinal direction is guided by the slide hole 196 of the sleeve 194 which is disposed in the bracket 142. In addition, the lock member 192 and the link member 174 engage with each other, so that the lock member 192 slides in the longitudinal direction along the slide hole 196. As a result, there is no need to machine the respective components that make up the handle lock mechanism 10 with high accuracy, and therefore, the cost to machine the respective components can be reduced. In particular, since the link member 174 and the lock member 192 are engaged with one another in the longitudinal direction, the above effect can easily be obtained.

Further still, since the link member 174 slides in the longitudinal direction along the upper surface of the top bridge 106, a reduction in size of the handle lock mechanism 10 can be easily achieved.

Further, in the present embodiment, while the operating force of the operating member 132 is input to the force point 200 at the center of the arm member 164 via the operation pin 140, the height direction of the operating member 132 is aligned to the greatest extent possible with the height direction of the arm member 164. Consequently, it is possible to ensure a stroke amount in the longitudinal direction of the lock member 192, while also reducing the size of the portion above the top bridge 106 in the handle lock mechanism 10.

Furthermore, in the present embodiment, the recess 198 into which the lock member 192 is inserted is provided in a side surface of the top bridge 106. In accordance with this feature, with a simple configuration, it is possible to lock the steering unit 24 including the top bridge 106. Further, simply by sliding the lock member 192 along the longitudinal direction, the lock member 192 is inserted into the recess 198, and steering of the steering unit 24 is locked. Consequently, the need for highly precise positional accuracy between the lock member 192 and the recess 198 is eliminated, and a further reduction in machining costs can be realized.

In a handle lock mechanism (10), accompanying swinging of an arm member (164) due to an operating force from an operating member (132) to the arm member (164), a link member (174) slides in a longitudinal direction in conjunction with an action point (204) of the arm member (164). The operating member (132) and the arm member (164) are arranged above a top bridge (106). In addition, a lock member (192) slides in the longitudinal direction in conjunction with the link member (174), whereby the lock member (192) engages in a recess (198) of the top bridge (106).

## Claims

1. A vehicle (12) with a handle lock mechanism (10) comprising an operating member (132) which is disposed on the vehicle (12) equipped with a steering unit (24) that is steerably supported with respect to a vehicle main body (16), together with being supported on the vehicle main body (16) and performing a handle locking operation with respect to a handle (110) that constitutes part of the steering unit (24), an arm member (164) to which an operating force of the operating member (132) is input, and a lock member (192) adapted to lock steering of the steering unit (24) by coming into engagement with the steering unit (24) accompanying swinging of the arm member (164) caused by the operating force, the handle lock mechanism (10) further comprising:
a link member (174) adapted to slide in a predetermined direction accompanying swinging of the arm member (164), and in conjunction with an action point (204) of the arm member (164); and
a top bridge (106) that constitutes part of the steering unit (24) and supports the handle (110)
wherein the lock member (192) slides in the predetermined direction in conjunction with the link member (174), whereby the lock member (192) engages with the top bridge (106);
a bracket (142) that covers the arm member (164) and the link member (174) while supporting the handle lock mechanism (10) on the vehicle main body (16);
wherein the operating member (132) and the arm member (164) are arranged at positions overlapping each other in a height direction,
**characterized in that** the operating member (132) and the arm member (164) are arranged above the top bridge (106); and
the link member (174) and the lock member (192) are disposed so as to overlap with the operating member (132) along a vertical direction.

2. The vehicle (12) according to claim 1, wherein the lock member (192) is disposed in a slide hole (196) formed in the bracket (142), and engages with the link member (174) so as to slide in the predetermined direction along the slide hole (196).

3. The vehicle (12) according to claim 1 or 2, wherein the link member (174) slides substantially in parallel with an upper surface of the top bridge (106) at a location above the top bridge (106).

4. The vehicle (12) according to any one of claims 1 to 3, wherein a fulcrum (202), a force point (200) to which the operating force is input, and the action point (204) are arranged in this order from above to below on the arm member (164), and the arm member (164) overlaps at least halfway with the operating member (132) along the vertical direction.

5. The vehicle (12) according to any one of claims 1 to 4, wherein a recess (198) into which the lock member (192) is inserted is provided in a side surface of the top bridge (106).

## Patentansprüche

1. Fahrzeug (12) mit einem Lenkersperrmechanismus (10), der ein Betätigungselement (132) aufweist, das an dem Fahrzeug (12) angeordnet ist, das mit einer Lenkeinheit (24) ausgestattet ist, die in Bezug auf einen Fahrzeughauptkörper (16) lenkbar gelagert ist, zusammen damit, dass er an dem Fahrzeughauptkörper (16) gelagert ist und einen Lenkersperrbetrieb in Bezug auf einen Lenker (110) durchführt, der Teil der Lenkeinheit (24) darstellt, ein Hebelelement (164), in das eine Betätigungskraft des Betätigungselements (132) eingegeben wird, sowie ein Sperrelement (192), das dazu ausgelegt ist, die Lenkung der Lenkeinheit (24) zu sperren, indem es, einhergehend mit dem durch die Betätigungskraft verursachten Verschwenken des Hebelelements (164), mit der Lenkeinheit (24) in Eingriff kommt, wobei der Lenkersperrmechanismus (10) ferner aufweist:
ein Koppelelement (174), das dazu ausgelegt ist, einhergehend mit dem Verschwenken des Hebelelements (164) und in Verbindung mit einem Wirkpunkt (204) des Hebelelements (164) in eine vorbestimmte Richtung zu gleiten; und
eine obere Brücke (106), die Teil der Lenkeinheit (24) darstellt und den Lenker (110) trägt,
wobei das Sperrelement (192) in Verbindung mit dem Koppelelement (174) in der vorbestimmten Richtung gleitet, wodurch das Sperrelement (192) mit der oberen Brücke (106) in Eingriff tritt;
einen Träger (142), der das Hebelelement (164) und das Koppelelement (174) bedeckt, während er den Lenkersperrmechanismus (10) an dem Fahrzeughauptkörper (16) trägt;
wobei das Betätigungselement (132) und das Hebelelement (164) an in Höhenrichtung einander überlappenden Positionen angeordnet sind;
**dadurch gekennzeichnet, dass** das Betätigungselement (132) und das Hebelelement (164) über der oberen Brücke (106) angeordnet sind; und
das Koppelelement (174) und das Sperrelement (192) so angeordnet sind, dass sie entlang einer vertikalen Richtung mit dem Betätigungselement (132) überlappen.

2. Das Fahrzeug (12) nach Anspruch 1, wobei das Sperrelement (192) in einem in dem Träger (142) ausgebildeten Gleitloch (196) angeordnet ist und mit dem Koppelelement (174) in Eingriff steht, um entlang dem Gleitloch (196) in der vorbestimmten Richtung zu gleiten.

3. Das Fahrzeug (12) nach Anspruch 1 oder 2, wobei das Koppelelement (174) im Wesentlichen parallel zu einer Oberseite der oberen Brücke (106) an einem Ort über der oberen Brücke (106) gleitet.

4. Das Fahrzeug (12) nach einem der Ansprüche 1 bis 3, wobei eine Stütze (202), ein Kraftpunkt (200), in den die Betätigungskraft eingegeben wird, und der Wirkpunkt (204) in dieser Reihenfolge von oben nach unten an dem Hebelelement (164) angeordnet sind, und das Hebelelement (164) mit dem Betätigungselement (132) entlang der vertikalen Richtung zumindest auf halben Wege überlappt.

5. Das Fahrzeug (12) nach einem der Ansprüche 1 bis 4, wobei eine Vertiefung (198), in die das Sperrelement (192) eingesetzt ist, in einer Seitenfläche der oberen Brücke (106) vorgesehen ist.

## Revendications

1. Véhicule (12) avec mécanisme de verrouillage de guidon (10) comprenant un élément d'actionnement (132) qui est disposé sur le véhicule (12) doté d'un dispositif de direction (24) qui est supporté de façon dirigeable par rapport au corps principal (16) du véhicule, tout en étant supporté sur le corps principal (16) du véhicule et réalisant une opération de verrouillage de guidon au niveau d'un guidon (110) qui fait partie du dispositif de direction (24), un élément formant bras (164) auquel une force d'actionnement de l'élément d'actionnement (132) est appliquée, et un élément de verrouillage (192) adapté pour verrouiller la direction du dispositif de direction (24) en entrant en engagement avec le dispositif de direction (24) accompagnant l'oscillation de l'élément formant bras (164) provoquée par la force d'actionnement, le mécanisme de verrouillage de guidon (10) comprenant en outre :
un élément de liaison (174) adapté pour coulisser dans une direction prédéterminée accompagnant l'oscillation de l'élément formant bras (164), et conjointement avec un point d'action (204) de l'élément formant bras (164) ; et
un pont supérieur (106) qui fait partie du dispositif de direction (24) et supporte le guidon (110)
dans lequel l'élément de verrouillage (192) coulisse dans la direction prédéterminée conjointement avec l'élément de liaison (174), de sorte que l'élément de verrouillage (192) s'engage avec le pont supérieur (106) ;
un support (142) qui couvre l'élément formant bras (164) et l'élément de liaison (174) tout en supportant le mécanisme de verrouillage de guidon (10) sur le corps principal (16) du véhicule ;
dans lequel l'élément d'actionnement (132) et l'élément formant bras (164) sont agencés à des positions se chevauchant entre elles dans le sens de la hauteur,
**caractérisé en ce que** l'élément d'actionnement (132) et l'élément formant bras (164) sont agencés au-dessus du pont supérieur (106) ; et
l'élément de liaison (174) et l'élément de verrouillage (192) sont disposés de façon à se chevaucher avec l'élément d'actionnement (132) dans un sens vertical.

2. Véhicule (12) selon la revendication 1, dans lequel l'élément de verrouillage (192) est disposé dans un trou de coulissement (196) formé dans le support (142), et s'engage avec l'élément de liaison (174) de façon à coulisser dans la direction prédéterminée le long du trou de coulissement (196).

3. Véhicule (12) selon la revendication 1 ou 2, dans lequel l'élément de liaison (174) coulisse essentiellement en parallèle avec une surface supérieure du pont supérieur (106) à un emplacement au-dessus du pont supérieur (106).

4. Véhicule (12) selon l'une quelconque des revendications 1 à 3, dans lequel un pivot (202), un point de force (200) auquel la force d'actionnement est appliquée, et le point d'action (204) sont agencés dans cet ordre du dessus vers le dessous sur l'élément formant bras (164), et l'élément formant bras (164) se chevauche au moins à moitié avec l'élément d'actionnement (132) le long du sens vertical.

5. Véhicule (12) selon l'une quelconque des revendications 1 à 4, dans lequel un creux (198) dans lequel l'élément de verrouillage (192) est inséré est fourni dans une surface latérale du pont supérieur (106).
